# EUROPEAN PATENT APPLICATION

(11) **EP 0 872 798 A1**
(43) Date of publication of application: **21.10.1998**
(21) Application number: 97121741.9
(22) Date of filing: 10.12.1997
(51) Int. Cl.: G06F 12/02

(54) **Computer memory organization**

(30) Priority: 21.03.1997 EP 97400650; 25.04.1997 PC /EP97/02112 T
(71) Applicant: CANAL+ Société Anonyme, 75711 Paris Cedex 15 (FR)
(72) Inventor: Meric, Jérôme, 60300 Senlis (FR); Sarfati, Jean-Claude, 93800 Epinay-sur-Seine (FR); Letourneur, Patrice, 92150 Suresnes (FR); Beuque, Jean-Bernard, Gérard, Maurice, 92270 Bois-Colombes (FR); Liao, Hongtao, 78180 Montigny-Btx (FR)
(74) Representative: Cozens, Paul Dennis

(57) **Abstract**

In a memory in a computer system, a plurality of buffer zones are defined by a buffer management system. A command defines a number NP of pools of buffers in a public buffer zone, and for each pool, a pool size PS of the number of buffers in the pool and the size BS of the buffers in that pool. The buffer management system is initialized to store, for each buffer zone, the buffer sizes and to cumulate and store the pool sizes. To address a buffer, the buffer management system determines the address of the start of the buffer from the desired pool and buffer numbers, using the stored information. The buffer management system also defines a header at the beginning of each buffer. Checking for out-of-limits conditions can also be provided. Various private buffers zones, allocated to respective different clients, can be similarly defined.

## Description

The present invention relates to computers, and more particularly to the division of memory areas therein for buffering purposes. It will be understood that the term "computer" is used in a broad sense, to encompass a system which performs processing and manipulation of data, whether such processing and manipulation is the primary purpose of the system or is subordinate or incidental to some more specialized function, such as receiver/decoders for digital television systems. However, it will be realized that it is not limited to that system or systems of that type, but is applicable more generally to a wide variety of computer systems. As used herein, the term "digital television system" includes for example any satellite, terrestrial, cable and other system.

The advent of digital transmission systems intended primarily for broadcasting television signals, in particular but not exclusively satellite television systems, has opened up the possibility of using such systems for a variety of purposes. One of these is to provide interactivity with the end user. As used herein, the term "digital transmission system" includes any transmission system for transmitting or broadcasting for example primarily audiovisual or multimedia digital data. Whilst the present invention is particularly applicable to a broadcast digital television system, the present invention may also be applicable to a fixed telecommunications network for multimedia internet applications and so on.

The present invention finds specific application in a broadcast digital television system in which received signals are passed to a receiver/decoder and thence to a television set. The term "receiver/decoder" used herein may connote a receiver for receiving either encoded or non-encoded signals, for example, television and/or radio signals. The term may also connote a decoder for decoding received signals. Embodiments of such receiver/decoders may include a decoder integral with the receiver for decoding the received signals, for example, in a "set-top box" or such a decoder functioning in combination with a physically separate receiver.

The receiver/decoder decodes a compressed MPEG-type signal into a television signal for the television set. The receiver/decoder is controlled by a remote controller handset, through an interface in the receiver/decoder. The receiver/decoder is used to process the incoming bit stream, and includes a computer system including a variety of application modules which cause the system to perform a variety of control and other functions.

Such a receiver/decoder may have a variety of devices coupled to it, such as a card reader for the user to pass an authorization card through to confirm which services the user is authorized to use, a hand-held TV receiver control wand, a TV display unit, and a second card reader for use with bank cards to allow the user to perform home banking functions. It may also have a variety of ports coupled to it, eg. a modem for access to the Internet and for conducting home banking transactions, a home computer, etc.

One way of providing the interactivity described above is to run an application on the receiver/decoder through which the television signal is received. It is desirable to enable a variety of applications to communicate with a variety of physical devices in a transparent manner. Our co-pending applications PCT/EP97/02115 and PCT/EP97/02116 describe systems in which one or more applications can be downloaded by a receiver/decoder and communicate with physical devices in the receiver/decoder such as parallel and serial interfaces and smartcard readers by means of a device driver for each device and an overall device manager.

It has been proposed to provide the capability for a receiver/decoder to interface with a variety of different signal channels, such as a modem, a serial channel, a parallel channel, an MPEG (compressed and coded video signal) channel, swipe card readers, and so on. The receiver/decoder includes a virtual machine which includes a run-time engine. The virtual machine is coupled to a device manager which is in turn coupled to the physical interfaces of the various channels via devices and device drivers.

In computer systems, particularly systems which are incorporated in some larger system such as a receiver/decoder for digital television or radio, the amount of memory is often limited. This means that the memory must be organized so that the use of memory space by the various functions required by the system is minimized. In addition, it may also be necessary to minimize the time required to access at least some parts of the memory.

The present invention is particularly concerned with the provision or organization of buffers in the memory.

The conventional technique for providing buffers is by a dynamic system for allocating the required buffers. However, in the present context this standard system has certain disadvantages. It tends to result in fragmentation of the memory, and its speed is restricted by the need for overhead operations. Also, if an expansion of the buffers is required, it may require movement of blocks of memory to create space for the expansion.

Accordingly, the present invention provides a buffer management system for defining and addressing buffers in a buffer zone in a memory in a computer system, comprising: pool size storage means for storing a plurality of pool sizes; buffer size storage means for storing, for each pool, a buffer size; and calculating means for calculating therefrom the address of a desired buffer in a desired pool.

The present invention also provides a buffer management system for defining and addressing buffers in a plurality of buffer zones in a memory in a computer system, comprising, for each buffer zone: pool size storage means for storing a plurality of pool sizes; buffer size storage means for storing, for each pool, a buffer size; and calculating means for calculating therefrom the address of a desired buffer in a desired pool.

For efficiency and simple management, any buffer zone is partitioned into buffers of different fixed sizes, the buffers of the same size being grouped into a buffer pool. The buffer management system can allocate buffers to applications as required and avoid conflict between applications each requiring memory.

Preferably means are included for determining the pool sizes in cumulative form and storing them in that form in the pool size storage means. A reserved area may be defined at the beginning of each pool, and means provided for selecting either the cumulative pool size direct or the output of the calculating means. The desired pool number, desired buffer number, and desired byte may be checked for out-of-bounds values.

Preferably, means are included for detecting overlap of different buffer zones.

The system may further include means for storing the start addresses of the buffer zones and means for storing the end addresses of the buffer zones, the overlap detecting-means including means for receiving the start and end addresses of each buffer zone from the storing means and means for determining whether a start address of a buffer zone is greater than the end address of the previous buffer zone.

The present invention also extends to a receiver/decoder including a buffer management system as described above.

The receiver/decoder may include means for storing a plurality of applications, said system being arranged to define and address buffers in a buffer zone for allocation to one application only and to define and address buffers in another buffer zone for allocation to the other applications.

In addition, the present invention provides a method of defining and addressing buffers in a buffer zone in a memory in a computer system, comprising the steps of:
storing a plurality of pool sizes;
storing, for each pool, a buffer size; and
calculating therefrom the address of a desired buffer in a desired pool.

The present invention also extends to a method of defining and addressing buffers in a plurality of buffer zones in a memory in a computer system, comprising the steps, for each buffer zone, of:
storing a plurality of pool sizes;
storing, for each pool, a buffer size; and
calculating therefrom the address of a desired buffer in a desired pool.

The method may further comprise the steps, for each buffer zone, of:
determining the pool sizes in cumulative form; and
storing the pool sizes in that form.

The method may further comprise the step, for each buffer zone, of defining a reserved area at the beginning of each pool.

The method may further comprise the step, for each buffer zone, of selecting either the cumulative pool size direct or the addresses of the buffer pools.

The method may further comprise the step, for each buffer zone, of checking for out-of-bounds values of desired pool number, desired buffer number, and desired byte.

The method may further comprise the step of detecting overlap of different buffer zones. If so, the method may further comprise the steps of:
storing the start addresses of the buffer zones;
storing the end addresses of the buffer zones; and
determining whether a start address of a buffer zone is greater than the end address of the previous buffer zone.

Various functions of the buffer management system may be implemented in hardware, for example in a dedicated integrated circuit; this may provide enhanced speed of operation. Preferably, however, at least some of the functions are implemented in software, preferably run by processing means which runs the applications; this allows greater flexibility, requires less components, and allows the system to be updated more readily.

A receiver/decoder including a computer system embodying the invention will now be described, by way of example, with reference to the drawings, in which:
Figure 1 is a schematic diagram of interfaces of the receiver/decoder;
Figure 2 is a functional block diagram of the receiver/decoder;
Figure 3 is a simplified diagram of the relationship of the RAM memory with the other memory units of the receiver/decoder;
Figure 4 is a diagram of the organization of a part of the RAM memory;
Figure 5 shows the structure of a Set_Buffer_Outline command;
Figure 6 is a diagram of the structure of a memory management unit;
Figure 7 is a diagram of a modified form of the organization of the RAM memory;
Figure 8 is a simplified diagram of the structure of the memory management unit for the memory organization of Fig. 7; and
Figures 9A to 9C illustrate the manner in which buffer usage is associated with different clients and devices.

To assist in understanding of the computer system, the digital satellite receiver/decoder will first be described briefly.

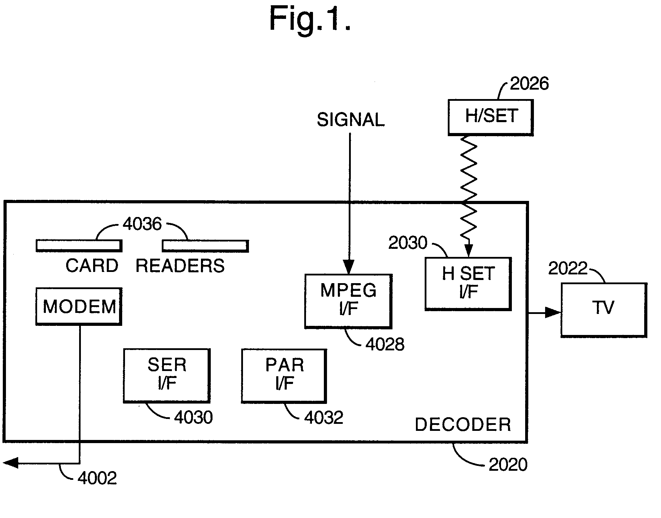

Referring to Figure 1, a receiver/decoder 2020 or set-top-box for use in a digital interactive television system in which the device driver of the embodiment is intended to be installed is schematically depicted. Details of a suitable digital interactive television system may be found in our co-pending applications PCT/EP97/02106 - 02117, the disclosures of which are herein incorporated by reference. For ease of reference, parts described in more detail in the aforementioned specifications are generally designated by the reference numerals used in those specifications.

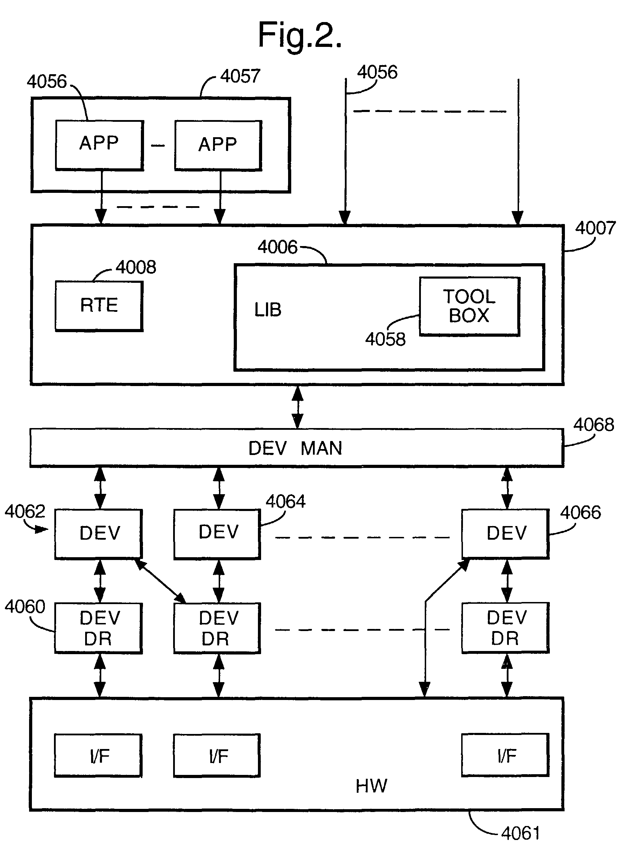

As described in more detail in the aforementioned specifications, referring to Figure 1 and 2, the receiver/decoder 2020 includes several ports; specifically, a tuner 4028 for the MPEG signal flow, a serial interface 4030, a parallel interface 4032, and two card readers 4036, one for a smartcard forming part of the system and one for bank cards (used for making payments, home banking, etc). The receiver/decoder also includes an interface 4034 to a modemmed back channel 4002 to the television signal producer, so that the user can indicate preferences, etc back to the television signal (programme) producer. The receiver also comprises a Run-Time-Engine 4008, a Device Manager 4068 and a plurality of Devices 4062 and Device Drivers 4066 for running one or more applications 4056.

For the purposes of this specification, an application is a piece of computer code for controlling high level functions of preferably the receiver/decoder 2020. For example, when the end user positions the focus of a remote controller on a button object seen on the screen of the television set 2022 and presses a validation key, the instruction sequence associated with the button is run.

An interactive application proposes menus and executes commands at the request of the end user and provides data related to the purpose of the application. Applications may be either resident applications, that is, stored in the ROM (or FLASH or other non-volatile memory) of the receiver/decoder 2020, or broadcast and downloaded into the RAM or FLASH memory of the receiver/decoder 2020.

Applications are stored in memory locations in the receiver/decoder 2020 and represented as resource files. The resource files comprise graphic object description unit files, variables block unit files, instruction sequence files, application files and data files, as described in more detail in the above-mentioned patent specifications.

The receiver/decoder contains memory divided into a RAM volume, a FLASH volume and a ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

The computer system can be regarded as centred on a run time engine 4008 forming part of a virtual machine 4007. This is coupled to applications on one side (the "high level" side), and, on the other side (the "low level" side), via various intermediate logical units discussed below, to the receiver/decoder hardware 4061. The receiver/decoder hardware can be regarded as including the various ports as discussed above (the interface 2030 for the handset 2026, the MPEG stream interface 4028, the serial interface 4030, the parallel interface 4032, the interfaces to the card readers 4036, and the interface 4034 to the modemmed back channel 4002).

With reference specifically to Figure 2, various applications 4057 are coupled to the virtual machine 4007; some of the more commonly used applications may be more or less permanently resident in the system, as indicated at 4057, while others will be downloaded into the system, eg from the MPEG data stream or from other ports as required.

The virtual machine 4007 includes, in addition to the run time engine 4008, some resident library functions 4006 which include a toolbox 4058. The library contains miscellaneous functions in C language used by the engine 4008. These include data manipulation such as compression, expansion or comparison of data structures, line drawing, etc. The library 4006 also includes information about firmware 4060 in the receiver/decoder 2020, such as hardware and software version numbers and available RAM space, and a function used when downloading a new device 4062. Functions can be downloaded into the library, being stored in FLASH or RAM memory.

The run time engine 4008 is coupled to a device manager 4068 which is coupled to a set of devices 4064 which are coupled to device drivers 4060 which are in turn coupled to the ports or interfaces. In broad terms, a device driver can be regarded as defining a logical interface, so that two different device drivers may be coupled to a common physical port. A device will normally be coupled to more than one device driver; if a device is coupled to a single device driver, the device will normally be designed to incorporate the full functionality required for communication, so that the need for a separate device driver is obviated. Certain devices may communicate among themselves.

As will be described below, there are 3 forms of communication from the devices 4064 up to the run time engine: by means of variables, buffers, and events which are passed to a set of event queues.

Each function of the receiver/decoder 2020 is represented as a device 4062. Devices can be either local or remote. Local devices 4064 include smartcards, SCART connector signals, modems, serial and parallel interfaces, a MPEG video and audio player and an MPEG section and table extractor. Remote devices 4066, executed in a remote location, differ from local devices in that a port and procedure must be defined by the system authority or designer, rather than by a device and device driver provided and designed by the receiver/decoder manufacturer.

The run time engine 4008 runs under the control of the microprocessor and a common application programming interface. They are installed in every receiver/decoder 2020 so that all receiver/decoders 2020 are identical from the application point of view.

The engine 4008 runs applications 4056 on the receiver/decoder 2020. It executes interactive applications 4056 and receives events from outside the receiver/decoder 2020, displays graphics and text, calls devices for services and uses functions of the library 4006 connected to the engine 4008 for specific computation.

The run time engine 4008 is an executable code installed in each receiver/decoder 2020, and includes an interpreter for interpreting and running applications. The engine 4008 is adaptable to any operating system, including a single task operating system (such as MS-DOS). The engine 4008 is based on process sequencer units (which take various events such as a key press, to carry out various actions), and contains its own scheduler to manage event queues from the different hardware interfaces. It also handles the display of graphics and text. A process sequencer unit comprises a set of action-groups. Each event causes the process sequencer unit to move from its current action-group to another action-group in dependence on the character of the event, and to execute the actions of the new action-group.

The engine 4008 comprises a code loader to load and download applications 4056 into the receiver/decoder memory 2028. Only the necessary code is loaded into the RAM or FLASH memory, in order to ensure optimal use. The downloaded data is verified by an authentication mechanism to prevent any modification of an application 4056 or the execution of any unauthorized application. The engine 4008 further comprises a decompressor. As the application code (a form of intermediate code) is compressed for space saving and fast downloading from the MPEG-2 transport stream or via a built-in receiver/decoder mode, the code must be decompressed before loading it into the RAM. The engine 4008 also comprises an interpreter to interpret the application code to update various variable values and determine status changes, and an error checker.

Before using the services of any device 4062, a program (such as an application instruction sequence) has to be declared as a "client", that is, a logical access-way to the device 4066 or the device manager 4068. The manager gives the client a client number which is referred to in all accesses to the device. A device 4066 can have several clients, the number of clients for each device 4066 being specified depending on the type of device 4066. A client is introduced to the device 4066 by a procedure "Device: Open Channel". This procedure assigns a client number to the client. A client can be taken out of the device manager 4068 client list by a procedure "Device: Close Channel".

The access to devices 4062 provided by the device manager 4068 can be either synchronous or asynchronous. For synchronous access, a procedure "Device: Call" is used. This is a means of accessing data which is immediately available or a functionality which does not involve waiting for the desired response. For asynchronous access, a procedure "Device: I/O" is used. This is a means of accessing data which involves waiting for a response, for example scanning tuner frequencies to find a multiplex or getting back a table from the MPEG stream. When the requested result is available, an event is put in the queue of the engine to signal its arrival. A further procedure "Device: Event" provides a means of managing unexpected events.

As noted above, the main loop of the run time engine is coupled to a variety of process sequencer units, and when the main loop encounters an appropriate event, control is temporarily transferred to one of the process sequencer units.

Thus, it can be seen that the computer system provides a platform having considerable flexibility in enabling an application to communicate with a variety of devices.

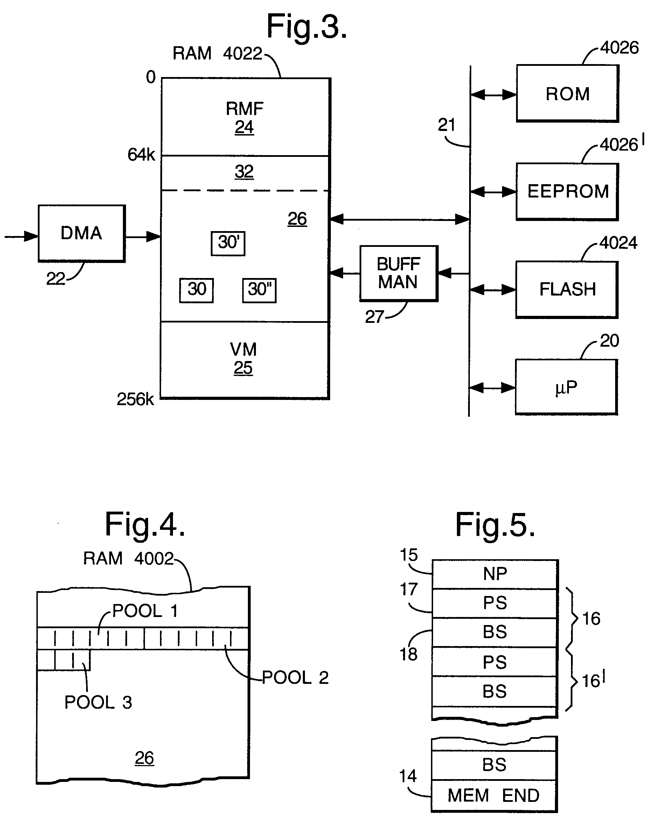

Referring to Figure 3, the receiver/decoder comprises a RAM memory 4022 coupled to a microprocessor 20 which is also coupled to a FLASH memory 4024, an EEPROM memory 4024', and a ROM memory 4026 over a bus 21. The RAM memory 4022 is also coupled to a DMA (direct memory access) unit 22 through which data (eg from an MPEG bitstream) can be entered directly into the RAM memory.

The RAM memory 4022 is 256 kbytes long, and is divided into 3 areas: an area 24 which is reserved for use by the manufacturer of the computer system, an area 25 which is reserved for use by the virtual machine (VM) 4007, and a user area 26 which is used to contain a variety of information such as buffers, applications 30, 30', 30'', data etc. The computer system is defined by a functional specification allowing the manufacturer considerable freedom in designing the hardware to implement the system; the memory area 24 is used in effect as an interface between the functions specified by the functional specification and the hardware. The VM 4007 and the microprocessor 20 can together be regarded as the run time engine (RTE) 4008. A variety of different applications may be loaded into the memory at different times.

Communication is necessary between the VM 4007 and the applications, and between the different applications themselves. This communication is handled primarily by means of buffers, which are common to the VM and the various applications.

In the computer system, a plurality of buffer zones are defined in a buffer area 32 in the user area 26. Each buffer zone is defined by a command which also defines the division of that buffer zone into individual buffers. The command defines a number of buffer pools in the buffer zone; for each pool, the size of the buffers in the pool and the number of buffers in the pool are given.

A command "Set_Outline_Buffers" partitions a "public" buffer zone. The buffers in a public buffer zone can be allocated and freed by any client. A command "Device_Open_Channel_Partition" partitions a "private" buffer zone for one client for efficient memory-usage. The buffers in a private buffer zone can be allocated only by the client that makes the partition, but can be freed by any client. Only one public buffer zone may be defined, whereas a plurality of private buffer zones may exist simultaneously. It is preferred that each client is able to partition at most only one private buffer zone.

The public buffer zone cannot be modified by clients after its creation, but a private buffer zone may be created and deleted on demand by the client associated therewith. When a client has partitioned a private buffer zone, buffers are allocated for the client from that private buffer zone, and not the public buffer zone; similarly when that client requests that a buffer is locked or deallocated after its allocation, a buffer in the private buffer zone is locked or deallocated respectively.

Figure 5 shows the logical format of the Set_Buffer_Outline command for the public buffer zone. This comprises an initial entry 15 defining the number of pools NP, followed by a set of entries 16, 16', etc., one for each pool, with each pool entry consisting of a first sub-entry 17 defining the pool size PS of the pool (ie the number of buffers in the pool) and a second sub-entry 18 defining the buffer size BS of the buffers (ie the number of bytes in the buffers) in the pool.

For convenience, these and other parameters used below are listed:
NP: number of pools
   per pool -
   PS: pool size (number of buffers in pool)
   BS: buffer size
PN: pool number
BN: buffer number (in pool)
ByN: byte number (in buffer)

In the user memory area 26, the pools of buffers are arranged sequentially from the beginning of that area, as shown in Figure 4. The actual layout shown is for 3 pools, with Pool 1 consisting of 5 buffers, Pool 2 consisting of 6 buffers, and Pool 3 consisting of 1 buffer It will also be noted that each buffer includes a header, of 16 bytes, at its beginning. This header is split into a 12-byte section which is available to users for use as buffer flags, etc, and a 4-byte section which is reserved for the use of the virtual machine 4007.

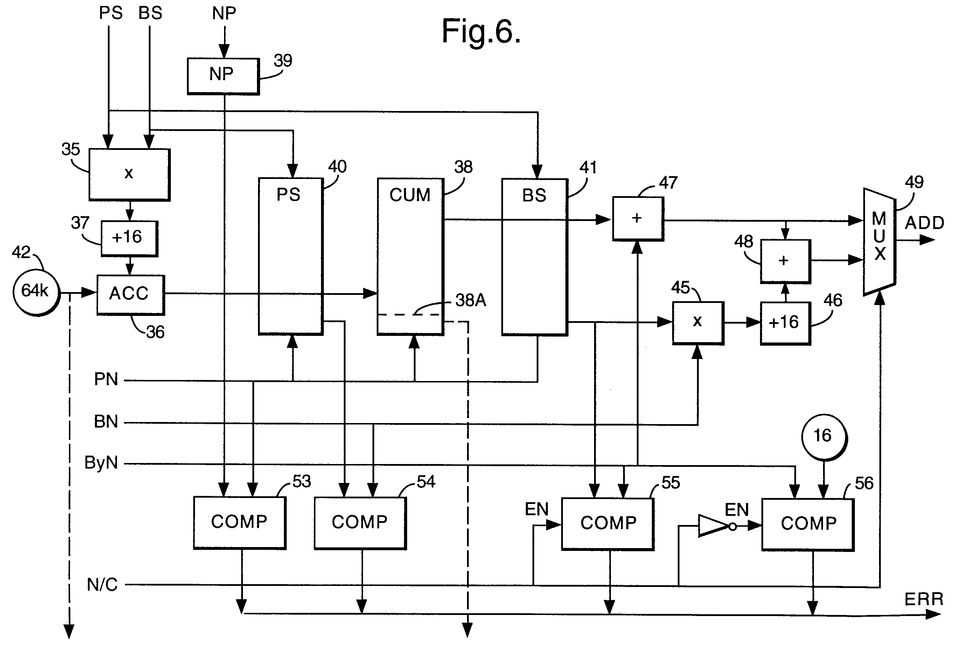

The run-time engine 4008 implements a buffer manager which can be regarded as forming an addressing path 27 between the bus 21 and the user area 26 of the RAM memory 4022. Figure 6 shows the logical organization of the buffer manager for the public buffer zone. This is first initialized by a Set_Buffer_Outline command under the control of the microprocessor 20; it is then used to address any desired buffer.

With reference to Figure 6, the sub-entries PS and BS for each pool in turn are fed to a multiplier 35, which forms their products PS*BS. An accumulator 36 is initialized with the value 64k (which represents the start address of the user area 26 of the RAM 4022 from a hard-wired value generator 42), and is fed with the succession of products PS*BS via an adder 37 which adds 16 into each product; this 16 represents the size of the reserved section at the start of each pool. The accumulator 36 therefore contains, in succession, the start addresses of each of the buffer pools in succession. These pool start addresses are fed to a cumulative address register 38 in which they are stored in sequence. Also, during initialization, the number of pools NP is stored in a number of pools register 39, the pool sizes are stored in a pool sizes register 40, and the buffer sizes BS are stored in the same sequence in a buffer size register 41.

Following initialization, the buffers can be addressed. To address a buffer, the desired buffer is defined by a pool number PN for the desired pool, a buffer number BN for the desired buffer in that pool, and a byte number ByN for the desired byte within that buffer.

The pool number PN is used to select the appropriate entries for that pool from the cumulative register 38 and the buffer size register 40. The buffer size BS, which is a fixed size, is fed to a multiplier 45, where it is multiplied by the buffer number BN. The resulting product is fed to an incrementer 46 which adds 16 to the product. The output of the cumulative register 38 is fed to an adder 47 where it has added to it the byte number ByN. The output of incrementer 46 is fed to an adder 48 where it is added to the output of adder 47. The output of adder 48 passes through a multiplexer 49 as the desired address; that is, the address of the desired byte of the desired buffer of the desired pool.

The buffer manager also includes error checking circuitry. The pool number PN is fed to a comparator 53 which is also fed with the number of pools NP from register 39, to check that the selected pool number is not greater than the number of pools; that is, to check that the selected pool is within the buffer zone. The buffer number BN is fed to a comparator 54 which is also fed with the output of the selected entry in the pool size register 40, to check that the selected buffer number is not greater than the number of buffers in the selected pool; that is, to check that the selected buffer is within the selected pool. The selected byte number is fed to a comparator 55 which is also fed with the size of the bufers in the selected pool, to check that the desired byte number is not greater than the length of the buffer; that is, to check that the selected byte is within the selected buffer. These comparators all feed a common output, producing an error signal ERR if any of the checks fail.

The description so far has assumed that a buffer (in the public buffer zone) is being addressed. However, it may be desired to address the 16-byte header of a buffer. The selection between these two options is controlled by a signal N/C, which selects between normal buffer accesses and what may for convenience be termed buffer control operations. For normal accesses, buffers are selected; the header of a buffer is only selected for control operations.

The N/C signal is fed to the multiplexer 49. For normal buffer accesses, this signal selects the output of adder 48, as described above. For control operations on the header of a buffer, however, the multiplexer selects instead the output of adder 47 direct. Since this path from the cumulative register 38 does not pass through the incrementer 46, this results in the selection of the desired byte in the header rather than in the buffer following that header.

For control operations on a buffer, the comparator 55 needs to be disabled. This comparator is therefore enabled by the signal N/C for normal buffer accesses and disabled for control operations. A further comparator 56 is also fed with the byte number ByN and the number of bytes in the headers, ie 16, and is enabled by the signal N/C for system accesses. This comparator check that the desired byte number is not greater than 16; that is, it checks that the selected byte is within the reserved area at the start of the selected buffer. Obviously, this check can be refined to discriminate between accesses to the 12-byte section which is available to users for use as buffer flags, etc, and the 4-byte section which is reserved for the use of the RTE.

If desired, the Set_Buffer_Outline command may also include a User Memory End parameter 14, as shown in Figure 5, defining the end of the user memory area 26.

The last entry into the command would be stored in a suitable register, and can be used to check that the buffer area does not extend beyond the end of the user memory area 26. (This is in general extremely unlikely, as space has to be left for the applications 30, 30', 30'', etc. However, it may occur if the system is designed so that the buffer zone can be located somewhere in the middle of the user area rather than at its beginning as described above.)

In principle, the Set_Buffers_Outline command can be used to initialize the public buffer zone at any time. However, re-initializing the buffer zone will effectively result in the loss of all (or nearly all) the information already in the buffers, so the Set_Buffer_Outline command will normally be executed only on system initialization.

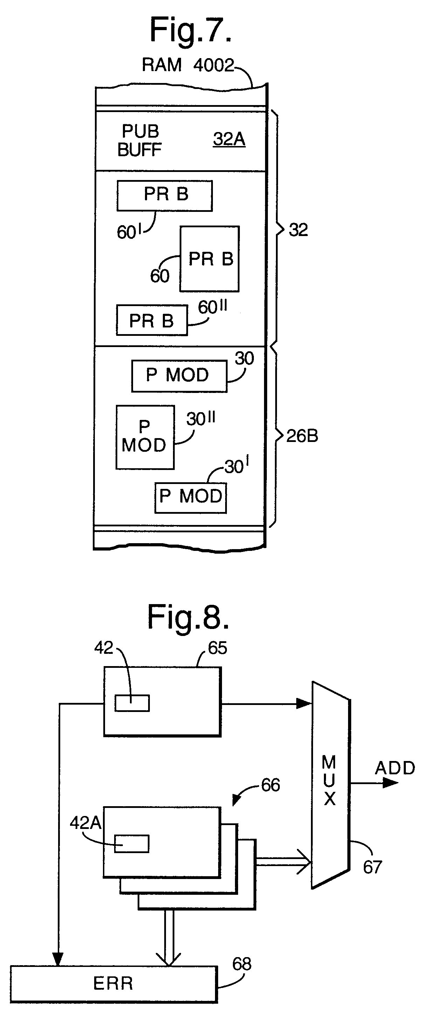

In the system as described so far, the buffer area 32 contains the set of public buffer pools as shown in Figure 4. Figures 7 and 8 show how private buffer zones are implemented in the receiver/decoder. As indicated above, the public buffer zone is supplemented by a number of private buffer zones 60, 60', 60'', etc. Each private buffer zone is assigned to a client; that client creates the private buffer zone and, if desired, erases it. Thus a private buffer zone is in a sense the property of the client which created it. However, other clients can access it to transfer information to and from the client which owns it.
The buffer management system may permit the private buffer zones to be located freely within the user memory area 26. However they are preferably all contained within a memory area 32A separate from the memory area containing the clients, as shown in Figure 7. This simplifies the detection of potentially conflicting usages of memory areas.

The private buffer zones 60, 60', 60'', etc. have the same structure as the public buffer zone, and are defined by a Device_Open_Channel_Partition command which is similar to the Set_Buffer_Outline command shown in Figure 5. A Device_Open_Channel_Partition command includes two additional fields: the first additional field contains the identifier of the client generating the command, and the second contains the memory address of the start of the buffer zone. It is convenient to omit the memory end field (shown at 14 in Figure 5).

Figure 8 shows the logical organization of the buffer manager 27 for the private buffer zones. The circuitry of Figure 6 is shown as block 65. In addition, there is a set of further blocks 66, one for each of the applications. Each of these blocks is substantially identical to block 65; in each of the blocks 66, a register 42A is used to store the initial address of the private buffer zone for the corresponding application. (As mentioned above, the Device_Open_Channel_Partition command format includes a field for the initial address of the buffer.) The blocks 65 and 66 all feed a multiplexer 67, which is used to select either the public buffer zone or a desired one of the private buffer zones.

The error signals from the units 65 and 66 can all be combined together. In addition however, an error unit 68 is provided, for detecting conflicts between different buffer zones.

The addresses of the starts of the buffer zones are available directly, from the register 42 and registers 42A. For the end addresses, the circuitry of Figure 6 and its initialization are slightly modified. The cumulative address register 38 contains the start addresses of the various pools in the buffer zone. This register is extended by 1 place, as shown at 38A. Also, the initialization procedure is continued after the generation of the start address of the last pool of the buffer zone, by multiplying the size of the last pool and its buffer size, and that product is accumulated in accumulator 36 and the result transferred to register extension 38A. The register extension 38A therefore contains the end address of the buffer zone.

The error unit 68 is fed with the start and end address of each buffer zone, and processes these to determine whether there are any overlaps. This can be done, for example, by arranging the buffer start addresses in sequence, and checking whether each start address is greater than the end address of the previous buffer zone. This unit can also be used, when a fresh buffer zone is to be generated, to search for a suitable memory region, looking for a gap between two existing buffer zones which is just larger than the desired new buffer zone.

There is actually a minor discrepancy here. The addresses in the register extensions 38A are actually not the true buffer end addresses but the addresses immediately following the ends of the buffer zones. However, this discrepancy is trivial, and can be resolved for example by decrementing the end addresses by 1 bit between the units 65 and 66 and the error unit 68.

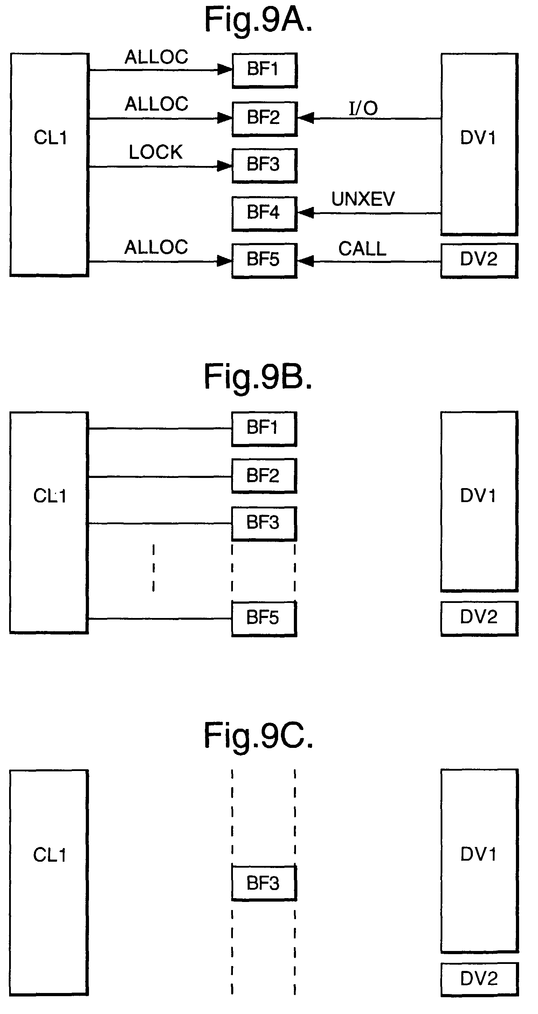

Figures 9A to 9C illustrate the manner in which buffer usage is associated with different clients and devices. Figure 9A shows an initial situation, in which the manager has used various processes (commands) to allocate 5 buffers BF1 to BF5.
Buffer BF1, which is unlocked, was allocated (created) by client CL1, by an allocation command ALLOC.
Buffer BF2 was also allocated by client CL1. This buffer is currently in use by device DV1 for an I/O operation which is not yet finished, through a command I/O; it will not accept a de-allocation command (FREE) until the I/O operation is finished.
Buffer BF3 has been locked by client CL1. The original allocation of this buffer is unknown; it might have been allocated by client CL1, some other client, a device addressed by client CL1, or a device addressed by some other client.
Buffer BF4 was allocated by device DV1 to be associated with an unexpected event addressed to client CL1. This event has not yet been sent.
Buffer BF5 was allocated by client CL1 for a synchronous access being performed with device DV2. The buffer could also be allocated by the device. The execution of the application can continue only after this operation.

Figure 9B shows the situation after client CL1 has been taken off the list for device 1 after the synchronous access involving buffer BF5 has occurred but before the end of the I/O asynchronous access involving buffer BF1.
Buffers BF1 and BF2 both continue to exist; neither of these is linked to device DV1.
Buffer BF3 continued to exist because it is locked. However, client CL1 or another client could de-allocate it.
Buffer BF4 was allocated by device DV1 addressed to client CL1, and has therefore been de-allocated, ie it has ceased to exist. This is true even if the unexpected event has not yet been sent (ie put in the queue of the application engine); it is also true if the event has been sent, unless this buffer has been locked by a LOCK command from the device DV1.
Buffer BF5 has not been de-allocated by client CL1 following its use.

Figure 9C shows the situation after client CL1 has taken itself off the device manager's list, with a Device: Close Channel command.
Buffers BF1, BF2, and BF5 have been de-allocated (deleted) by the device manager to clear the memory.
Buffer BF3 has not been de-allocated, because it is locked. It will be de-allocated by another client.

The precise details of the implementation of the various functions described above, and their distribution between hardware and software, are a matter of choice for the implementor and will not be described in detail. It is, however, noted that dedicated integrated circuits capable of performing the operations required are commercially available or can be readily designed, and these can be used as the basis for a hardware accelerator, or more preferably modified to produce a dedicated hardware accelerator, to implement various of the operations required, thereby reducing the processing power required to run the software. However, the operations required may be implemented in software if sufficient processing power is available.

The modules and other components have been described in terms of the features and functions provided by each component, together with optional and preferable features. With the information given and specifications provided, actual implementation of these features should be straightforward for one skilled in the art, and the precise details are left to the implementor. As an example, certain modules could be implemented in software, preferably written in the C programming language and preferably compiled to run on the processor used to run the application; however, some components may be run on a separate processor, and some or all components may be implemented by, dedicated hardware.

The above modules and components are merely illustrative, and the invention may be implemented in a variety of ways, and, in particular, some components may be combined with others which perform similar functions, or some may be omitted in simplified implementations. Hardware and software implementations of each of the functions may be freely mixed, both between components and within a single component.

It will be readily understood that the functions performed by the hardware, the computer software, and such like are performed on or using electrical and like signals. Software implementations may be stored in ROM, or may be patched in FLASH.

To summarise the preferred embodiment of the present invention, in a memory in a computer system, a plurality of buffer zones are defined by a buffer management system. A command defines a number NP of pools of buffers in a public buffer zone, and for each pool, a pool size PS of the number of buffers in the pool and the size BS of the buffers in that pool. The buffer management system is initialized to store, for each buffer zone, the buffer sizes and to cumulate and store the pool sizes. To address a buffer, the buffer management system determines the address of the start of the buffer from the desired pool and buffer numbers, using the stored information. The buffer management system also defines a header at the beginning of each buffer. Checking for out-of-limits conditions can also be provided. Various private buffer zones, allocated by respective different clients, can be similarly defined.

It will be understood that the present invention has been described above purely by way of example, and modifications of detail can be made within the scope of the invention. Each feature disclosed in the description, and (where appropriate) the claims and drawings may be provided independently or in any appropriate combination.

## Claims

1. A buffer management system for defining and addressing buffers in a buffer zone in a memory in a computer system, comprising:
pool size storage means for storing a plurality of pool sizes;
buffer size storage means for storing, for each pool, a buffer size; and
calculating means for calculating therefrom the address of a desired buffer in a desired pool.

2. A buffer management system for defining and addressing buffers in a plurality of buffer zones in a memory in a computer system, comprising, for each buffer zone:
pool size storage means for storing a plurality of pool sizes;
buffer size storage means for storing, for each pool, a buffer size; and
calculating means for calculating therefrom the address of a desired buffer in a desired pool.

3. A system according to claim 2 including means for detecting overlap of different buffer zones.

4. A system according to claim 3, including means for storing the start addresses of the buffer zones and means for storing the end addresses of the buffer zones, the overlap detecting means including means for receiving the start and end addresses of each buffer zone from the storing means and means for determining whether a start address of a buffer zone is greater than the end address of the previous buffer zone.

5. A system according to any preceding claim including means, for the or each buffer zone, for determining the pool sizes in cumulative form and storing them in that form in the pool size storage means.

6. A system according to any preceding claim including, for the or each buffer zone, means for defining a reserved area at the beginning of each pool.

7. A system according to claims 5 and 6 including means, for the or each buffer zone, for selecting either the cumulative pool size direct or the output of the calculating means.

8. A system according to any of the preceding claims including means, for the or each buffer zone, for checking for out-of-bounds values of desired pool number, desired buffer number, and desired byte.

9. A receiver/decoder including a buffer management system according to any previous claim.

10. A receiver/decoder according to claim 9, including means for storing a plurality of applications, said system being arranged to define and address buffers in a buffer zone for allocation to one application only and to define and address buffers in another buffer zone for allocation to the other applications.

11. A method of defining and addressing buffers in a buffer zone in a memory in a computer system, comprising the steps of:
storing a plurality of pool sizes;
storing, for each pool, a buffer size; and
calculating therefrom the address of a desired buffer in a desired pool.

12. A method of defining and addressing buffers in a plurality of buffer zones in a memory in a computer system, comprising the steps, for each buffer zone, of:
storing a plurality of pool sizes;
storing, for each pool, a buffer size; and
calculating therefrom the address of a desired buffer in a desired pool.

13. A method according to claim 12, further comprising the step of detecting overlap of different buffer zones.

14. A method according to claim 13, comprising the steps of:
storing the start addresses of the buffer zones;
storing the end addresses of the buffer zones; and
determining whether a start address of a buffer zone is greater than the end address of the previous buffer zone.

15. A method according to any of claims 11 to 14, further comprising the steps, for the or each buffer zone, of:
determining the pool sizes in cumulative form; and
storing the pool sizes in that form.

16. A method according to any of claims 11 to 15, further comprising the step, for the or each buffer zone, of defining a reserved area at the beginning of each pool.

17. A method according to claims 15 and 16, further comprising the step, for the or each buffer zone, of selecting either the cumulative pool size direct or the addresses of the buffer pools.

18. A method according to any of claims 11 to 17, further comprising the step, for the or each buffer zone, of checking for out-of-bounds values of desired pool number, desired buffer number, and desired byte.
